# EUROPÄISCHE PATENTSCHRIFT

(11) **EP 4 741 652 B1**
(45) Veröffentlichungstag und Bekanntmachung des Hinweises auf die Patenterteilung: **28.10.2026**
(21) Anmeldenummer: 24211122.7
(22) Anmeldetag: 06.11.2024
(51) Int. Cl.: F03D 5/04, F03D 5/02

(54) **WINDKRAFTANLAGE**
WIND POWER PLANT
INSTALLATION EOLIENNE

(43) Veröffentlichungstag der Anmeldung: 13.05.2026
(73) Patentinhaber: FNF Innovation Sh.P.K., 60000 Gjilan, Kosovo (AL)
(72) Erfinder: FEHMI, Mustafa, 60000 Gjilan, Kosovo (AL)
(74) Vertreter: Kador & Partner Part mbB

(56) Entgegenhaltungen:
- DE-A1- 2 150 204
- US-A- 5 134 305

## Beschreibung

Die vorliegende Erfindung betrifft eine Windkraftanlage mit einer vertikalen Rotationsachse.

Windkraftanlagen mit vertikaler Rotationsachse sind im Stand der Technik bekannt.

Beispielsweise zeigt WO 2019/002549 A1 eine Vertikalwindkraftanlage mit einer Vielzahl vertikaler Flügel, die unabhängig voneinander um eine jeweilige Flügeldrehachse motorisch drehbar beweglich und auf einer gemeinsamen Kreisbahn um eine vertikale Rotordrehachse rotierbar gelagert sind, wobei die Flügel jeweils an wenigstens einem Pitchmotor zum motorischen Drehen der Flügel um ihre jeweilige Flügeldrehachse befestigt gehalten sind.

DE 21 50 204 A1 zeigt einen Windmotor zur Erzeugung mechanischer Kraft der Aerodynamik, bei dem ein endloses Treibbandsegel mit faltbaren Windtaschen eingesetzt ist. Dieses kehrt sich an den Endlagen über gelagerte Trommeln oder Rollen um und überträgt die aufgenommene Windkraft auf die Achswellen.US 5 134 305 A zeigt eine windbetriebene Vorrichtung zur Stromerzeugung, bei der faltbare Segel an einer endlosen Kette angebracht sind. Die Segel entfalten sich mit dem Wind und falten sich gegen den Wind als Windfahnen zurück. Beim Umlauf treiben die Ketten über Zahnräder eine Welle an, die mit einem Generator verbunden ist. Mehrere Ketten nebeneinander bilden eine Windplattform für höhere Effizienz.

Die vorliegende Erfindung hat sich zum Ziel gesetzt, eine Windkraftanlage mit vertikaler Rotationsachse bereitzustellen, welche eine verbesserte Windausnutzung aufweist, die zu einer erhöhten Leistung führt.

Die vorliegende Erfindung stellt daher eine Windkraftanlage zur Verfügung, die einen Turm, einen Rotor mit einer Rotorwelle, mehrere Rotorblätter, die mittels eines Zugmitteltriebs mit dem Rotor gekoppelt sind, und eine Ausgangswelle umfasst. Die Rotorwelle des Rotors erstreckt sich in vertikaler Richtung und ist in dem Turm gelagert. Ebenso ist die Ausgangswelle, die von der Rotorwelle angetrieben wird, in dem Turm angeordnet. An der Ausgangswelle kann z.B. ein Generator angeschlossen sein, der von der Windkraftanlage angetrieben wird. Es ist ebenso möglich, andere anzutreibende Maschinen, Komponenten oder Anlagen an der Ausgangswelle anzuschließen.

Die Rotorblätter der Windkraftanlage erstrecken sich in vertikaler Richtung und sind in einer horizontalen Ebene auf einer ovalen Führungsbahn angeordnet, auf der sie um den Rotor rotieren. Insbesondere können drei Rotorblätter auf der Führungsbahn angeordnet sein, wobei ein Abstand zwischen den einzelnen Rotorblättern einem Umfang des Rotors entspricht.

Die ovale Führungsbahn weist auf einer Seite eine Breite auf, die einer Breite einer maximalen Windangriffsfläche der Rotorblätter entspricht. Auf einer gegenüberliegenden Seite weist die Führungsbahn hingegen eine Breite auf, die einer Breite einer minimalen Windangriffsfläche der Rotorblätter entspricht. Bei den beiden Seiten kann es sich insbesondere um Längsseiten der ovalen Führungsbahn handeln.

Dadurch stellen sich die Rotorblätter auf der einen Seite der Führungsbahn mit ihrer maximalen Windangriffsfläche einer Windströmung entgegen, während sie auf der gegenüberliegenden Seite lediglich mit einer minimalen Windangriffsfläche in der Windströmung stehen. Folglich wird durch die Windströmung im Wesentlichen eine Kraft auf die Rotorblätter der einen Seite ausgeübt, die dazu führt, dass der Rotor über den Zugmitteltrieb in eine Drehung versetzt wird. Insbesondere können die Rotorblätter auf der einen Seite derart mit ihrer maximalen Windangriffsfläche in der Windströmung stehen, dass die resultierende Kraft senkrecht auf diese wirkt (maximale Kraft).

Durch eine Verwendung von mindestens drei Rotorblättern kann sich immer mindestens ein Rotorblatt auf der Seite der Führungsbahn befinden, auf der seine maximale Windangriffsfläche der Windströmung ausgesetzt ist. Dadurch kann der Rotor ohne weitere Maßnahmen aus dem Stillstand beschleunigt werden.

Die ovale Führungsbahn kann insbesondere zwei einander gegenüberliegende kreisbogenförmige Abschnitte aufweisen, zwischen denen zwei gerade Abschnitte angeordnet sind. Mit anderen Worten können die zwei kreisbogenförmigen Abschnitte über die zwei geraden Abschnitte miteinander verbunden sein. Die kreisbogenförmigen Abschnitte können dabei zweckmäßigerweise einen Mittelpunktswinkel im Bereich von 90° bis 270° und insbesondere einen Mittelpunktswinkel von 180° aufweisen.

Eine Länge eines geraden Abschnitts der ovalen Führungsbahn entspricht einem Umfang des Rotors. Insbesondere können ein gerader Abschnitt auf der einen als auch ein gerader Abschnitt auf der gegenüberliegenden Seite die beschriebene Länge aufweisen. Dadurch kann während einer kompletten
Drehung des Rotors auf das mindestens eine Rotorblatt, das mit seiner maximalen Windangriffsfläche in der Windströmung steht, eine maximale Kraft ausgeübt werden. Folglich kann durch die Ausgestaltung der ovalen Führungsbahn, eine Leistungssteigerung im Vergleich zu einer kreisförmigen Rotation der Rotorblätter um den Rotor erzielt werden.

Gemäß einer weiteren Ausführungsform kann die ovale Führungsbahn dazu eingerichtet sein, die Breite der Rotorblätter von einem Wert bei maximaler Windangriffsfläche auf einen Wert bei minimaler Windangriffsfläche zu reduzieren und vice versa. Mit anderen Worten kann mittels der Führungsbahn bewirkt werden, dass die Breite der Rotorblätter derart variiert, dass sie auf der einen Seite ihre maximale und auf der gegenüberliegenden Seite ihre minimale Windangriffsfläche aufweisen.

In einer bevorzugten Ausführungsform kann sich dazu eine Breite der beiden kreisbogenförmige Abschnitte kontinuierlich von der Breite der einen Seite auf die Breite der gegenüberliegenden Seite reduzieren. Mit anderen Worten kann die Führungsbahn auf einer Länge eines der beiden kreisbogenförmigen Abschnitte kontinuierlich schmaler werden, wenn sich die Rotorblätter von der einen auf die gegenüberliegende Längsseite bewegen und auf einer Länge des anderen kreisbogenförmigen Abschnitts kontinuierlich breiter werden, wenn sich die Rotorblätter von der gegenüberliegenden Längsseite zurück auf die eine Längsseite bewegen. Durch die Verengung der Führungsbahn in den kreisbogenförmigen Abschnitten können die Windangriffsflächen der Rotorblätter verkleinert und durch die Aufweitung der Führungsbahn in den kreisbogenförmigen Abschnitten können die Windangriffsflächen der Rotorblätter vergrößert werden.

Gemäß einer Ausführungsform kann dies dadurch erfolgen, dass die Rotorblätter entlang ihrer Längsachse zusammfaltbar oder zusammenklappbar sind, um die minimale Windangriffsfläche einzustellen.

Wenn die Rotorblätter in den kreisbogenförmigen Abschnitt eintreten, der die breite Führungsbahn auf der einen Längsseite mit der schmalen Führungsbahn auf der gegenüberliegenden Längsseite verbindet, werden sie durch dessen kontinuierliche Verengung nach und nach zusammengeklappt bzw. -gefaltet, bis sie auf der gegenüberliegenden Längsseite ihre minimale Windangriffsfläche aufweisen. Die Rotorblätter können im zusammengeklappten Zustand insbesondere derart in der Windströmung stehen, dass eine Breite der minimalen Windangriffsfläche einer doppelten Dicke eines Rotorblatts entspricht. In diesem Fall kann die Breite der Führungsbahn auf der entsprechenden Längsseite zweckmäßigerweise im Wesentlichen der doppelten Dicke der Rotorblätter entsprechen.

Wenn die Rotorblätter in den kreisbogenförmigen Abschnitt eintreten, der die schmale Führungsbahn mit der breiten Führungsbahn verbindet, werden sie durch dessen kontinuierliche Aufweitung nach und nach wieder aufgeklappt bzw. aufgefaltet bis sie bei Erreichen des geraden Abschnitts wieder ihre maximale Windangriffsfläche aufweisen. Die Rotorblätter können im aufgeklappten Zustand insbesondere derart in der Windströmung stehen, dass eine Breite der maximalen Windangriffsfläche einer Breite eines Rotorblatts entspricht. In diesem Fall kann die Breite der Führungsbahn auf der entsprechenden Längsseite zweckmäßigerweise im Wesentlichen der Breite der Rotorblätter entsprechen.

Folglich kann ein Ende der beiden kreisbogenförmigen Abschnitte im Wesentlichen so breit wie ein Rotorblatt und ein gegenüberliegendes Ende der beiden kreisbogenförmigen Abschnitte im Wesentlichen so breit wie eine doppelte Dicke eines Rotorblatts sein.

Gemäß einer Ausführungsform kann der Zugmitteltrieb an einen inneren Umfang der ovalen Führungsbahn angrenzen. Mit anderen Worten kann sich der Zugmitteltrieb auf einer Innenseite der ovalen Führungsbahn befinden, um eine Antriebskraft von den Rotorblättern auf den Rotor mit der Rotorwelle zu übertragen.

Auf einem äußeren Umfang der ovalen Führungsbahn kann zudem mindestens eine Führungsschiene angeordnet sein. Um die Rotorblätter wie oben beschrieben auf der Führungsbahn zu bewegen, können diese auf einer dem inneren Umfang der ovalen Führungsbahn zugewandten Seite mit mindestens einem Zugmittel des Zugmitteltriebs verbunden sein. Der Zugmitteltrieb kann als Kettentrieb mit einer oder mehreren Ketten ausgeführt sein. Die eine oder die mehreren Ketten können geeignete Verbindungsmittel zum Befestigen der Rotorblätter aufweisen. Beispielsweise können an den Rotorblättern zugewandten Außenlaschen der Ketten entsprechende Verbindungsmittel angebracht sein. Alternativ kann der Zugmitteltrieb als Riementrieb mit einem oder mehreren Riemen ausgeführt sein. In diesem Fall können die Riemen geeignete Verbindungsmittel zum Befestigen der Rotorblätter umfassen. Beispielsweise können an den Rotorblättern zugewandten Oberflächen der Riemen geeignete Verbindungsmittel angebracht, z.B. angeklebt sein.

Auf einer dem äußeren Umfang der ovalen Führungsbahn zugewandten Seite können die Rotorblätter in der mindestens einen Führungsschiene geführt sein. Dazu kann die Führungsschiene geeignete Führungselemente aufweisen, die mit den Rotorblättern verbunden sein können. Bei der mindestens einen Führungsschiene kann es sich beispielsweise um eine Gleitschiene mit Gleitelementen und/oder eine Laufschiene mit Rollen handeln. Insbesondere können zwei Führungsschienen vorhanden sein, die auf dem äußeren Umfang der ovalen Führungsbahn in vertikaler Richtung beabstandet voneinander angeordnet sind.

Bevorzugt können die Rotorblätter eine im Wesentlichen viereckige Form aufweisen und an ihren Ecken mit dem Zugmitteltrieb und den Führungsschienen verbunden sein. In diesem Fall kann die Längsachse gleichzeitig eine Symmetrieachse der Rotorblätter sein. Insbesondere können dem inneren Umfang der Führungsbahn zugewandte Ecken mit Zugmitteln des Zugmitteltriebs und dem äußeren Umfang der Führungsbahn zugewandte Ecken mit Führungselementen der beiden Führungsbahnen verbunden sein. Auf diese Weise können die Rotorblätter zuverlässig zusammen- und wieder aufgeklappt bzw. gefaltet werden.

Die Rotorblätter können beispielsweise aus einem geeigneten Stoff z.B. aus Nylon- oder Polyestergewebe hergestellt sein, der beispielsweise auf einen Rahmen gespannt sein kann, um die notwendige Stabilität bereitzustellen. Der Rahmen kann derart ausgeführt sein, dass die Rotorblätter entlang ihrer Längsachse zusammen- und wieder aufgeklappt werden können. Alternativ kann auf einen Rahmen verzichtet und ein entsprechend steifer Stoff als Material für die Rotorblätter verwendet werden. In diesem Fall können die Rotorblätter z.B. an ihrer Längsachse eine Faltkante aufweisen, entlang derer sie zusammen- und aufgefaltet werden können.

Es ist ebenso möglich, dass die Rotorblätter aus Kunststoff, insbesondere glasfaserverstärktem Kunststoff, oder Metall, insbesondere Leichtmetall, gefertigt sind. In diesem Fall können die Rotorblätter z.B. aus zwei gleichen Teilen bestehen, die z.B. mit Scharnieren verbunden sein können, um die Rotorblätter zusammen- und aufzuklappen.

Wenn der Zugmitteltrieb als Kettentrieb ausgeführt ist, kann dieser drei Zahnradpaare umfassen, die nebeneinander auf einer Innenseite der ovalen Führungsbahn angeordnet sind. Insbesondere können die Zahnradpaare derart nebeneinander angeordnet sein, dass sie die oben beschriebene Form in Längsrichtung der ovalen Führungsbahn ausbilden, bei der eine Länge des geraden Abschnitts einem Umfang des Rotors entspricht. Dazu kann z.B. ein horizontaler Abstand zwischen den Zahnradpaaren geeignet gewählt sein. Insbesondere können zwei äußere Zahnradpaare einen gleichen Abstand zu einem mittleren Zahnradpaar aufweisen.

Jedes Zahnradpaar kann zwei in vertikaler Richtung voneinander beabstandete Zahnräder enthalten, die auf einer Welle angebracht sind. Die Elemente der Zahnradpaare können identisch ausgeführt sein. Insbesondere können die Zahnräder einen gleichen Durchmesser und eine gleiche Zähnezahl umfassen. Der Kettentrieb kann in diesem Fall zwei (identische) Ketten enthalten, die jeweils ein Zahnrad jedes Zahnradpaars umschlingen und an denen jeweils eine Ecke der Rotorblätter befestigt ist. Ein Abstand zwischen den beiden Zahnrädern jedes Zahnradpaars kann zweckmäßigerweise gleich einem Abstand zwischen den beiden Führungsschienen sein und im Wesentlichen einer Länge der Rotorblätter entsprechen. Dadurch erstrecken sich die Rotorblätter immer vollständig in vertikale Richtung und werden durch die Befestigung an den Ketten und Führungsschienen nicht gestaucht.

Das mittlere der drei Zahnradpaare kann den Rotor mit der Rotorwelle umfassen. Beispielsweise kann mindestens eines der beiden Zahnräder des mittleren Zahnradpaars fest mit der Rotorwelle verbunden sein und somit als Rotor fungieren. Es ist ebenso möglich, dass das Zahnradpaar in seiner Gesamtheit mit der Rotorwelle verbunden ist und somit als Rotor bezeichnet werden kann. Dazu kann die Welle des mittleren Zahnradpaars beispielsweise einstückig mit der Rotorwelle ausgebildet sein. Es ist ebenso möglich, dass die Welle des mittleren Zahnradpaars und die Rotorwelle mit mittels einer Kupplung oder jeder anderen geeigneten Wellenverbindung miteinander verbunden sind.

In einer bevorzugten Ausführungsform kann der Kettentrieb mit den drei Zahnradpaaren in einem Rahmen gelagert sein. Beispielsweise können die beiden Zahnräder jedes Zahnradpaars fest mit der jeweiligen Welle verbunden sein, die dann mittels geeigneter Lager drehbar in dem Rahmen gelagert sein kann. Es ist ebenso möglich, dass die Zahnräder der beiden äußeren Zahnradpaare drehbar auf der jeweiligen Welle gelagert sind und diese Wellen fest mit dem Rahmen verbunden sind. In diesem Fall kann lediglich die Welle des mittleren Zahnradpaars, welche mit der Rotorwelle verbunden oder selbst die Rotorwelle ist, drehbar in dem Rahmen gelagert sein.

Zur Realisierung der beschriebenen Lagerungsmöglichkeiten kann der Rahmen beispielsweise mindestens zwei Streben aufweisen, die sich horizontal oberhalb und unterhalb der Zahnradpaare in Längsrichtung der ovalen Führungsbahn erstrecken können. Die Streben können geeignete Adapter aufweisen, um die Zahnradpaare aufzunehmen. Es ist ebenso möglich, dass der Rahmen als Käfig mit zusätzlichen horizontalen und vertikalen Streben ausgeführt ist.

Der Rahmen kann neben dem Kettentrieb auch die Führungsbahnen mit den äußeren Führungsschienen aufnehmen, so dass auch die Rotorblätter in dem Rahmen integriert sind. In diesem Fall kann der Rahmen insbesondere drehbar auf einem oberen Abschnitt des Turms gelagert sein, um die Rotorblätter bei Bedarf ausrichten zu können.

Wenn anstelle des Kettentriebs ein Riementrieb verwendet wird, so gelten die obigen Ausführungen in gleicher Weise und es kommen lediglich anstelle von Zahnradpaaren Riemenscheibenpaare und anstelle von Ketten Riemen zum Einsatz.

In einer Ausführungsform kann die Ausgangswelle in dem Turm über ein Winkelgetriebe und/oder eine oder mehrere Kurbelwellen von der Rotorwelle angetrieben werden. Das Winkelgetriebe kann ein Ritzel und ein Tellerrad enthalten, wobei das Ritzel fest mit der Rotorwelle und das Tellerrad fest mit einer Kurbelwelle verbunden sein kann. Dabei kann das Ritzel an einem Ende der Rotorwelle und das Tellerrad an einem Ende der Kurbelwelle angebracht sein. Die beiden Zahnräder können beispielsweise auf die jeweilige Welle gepresst, geschrumpft oder mittels einer geeigneten Welle-Nabe-Verbindung mit dieser verbunden sein. Das Winkelgetriebe ermöglicht es eine Drehung der Rotorwelle um eine vertikale Rotationsachse auf einfache und kompakte Weise in eine Drehung einer Kurbelwelle, die üblicherweise horizontal angeordnet ist, umzuwandeln. Mittels einer geeigneten Wahl der Übersetzung kann zudem eine Drehzahl der Kurbelwelle und damit eine Ausgangsdrehzahl der Windkraftanlage eingestellt werden.

Wenn nur eine Kurbelwelle verwendet wird, so kann diese auf einem Fundament in dem Turm angeordnet und in geeigneten Lagerböcken gelagert sein. In diesem Fall kann sich die Rotorwelle über eine gesamte Länge des Turms erstrecken und mit ihrem Ritzel in das Tellerrad an dem einen Ende der Kurbelwelle eingreifen. Die anzutreibende Ausgangswelle kann über eine geeignete Wellenverbindung, z.B. über eine Kupplung mit der Kurbelwelle verbunden sein. Die Ausgangswelle kann sich aus einem Innenraum des Turms durch dessen Gehäuse z.B. horizontal nach außen erstrecken, um z.B. einen Generator anzutreiben. Es ist jedoch ebenso möglich, dass der Generator in dem Turm angeordnet ist.

Insbesondere können jedoch zwei Kurbelwellen zum Einsatz kommen, wobei die Rotorwelle über das Winkelgetriebe, wie oben beschrieben, mit einer ersten Kurbelwelle und die erste Kurbelwelle über mehrere Zugmittel mit einer zweiten Kurbelwelle verbunden sein kann. Die zweite Kurbelwelle kann wiederum mittels einer geeigneten Wellenverbindung mit der Ausgangswelle verbunden sein. Bevorzugt können sich die beiden Kurbelwellen in horizontaler Richtung erstrecken und parallel zueinander angeordnet sein.

In dieser Ausführungsform kann die zweite Kurbelwelle, wie oben beschrieben, auf einem Fundament des Turms und die erste Kurbelwelle auf einer bestimmten Höhe in dem Turm angeordnet sein. Zur Realisierung von Letzterem können sich z.B. in/an zwei gegenüberliegenden Innenwänden des Turms geeignete Lager befinden, in denen die erste Kurbelwelle gelagert sein kann.

Die Zugmittel, welche die zweite Kurbelwelle an die erste Kurbelwelle koppeln, können zweckmäßigerweise an korrespondierenden Kröpfungen der ersten und zweiten Kurbelwelle angebracht sein, um eine Kraftübertragung mittels der Zugmittel zu bewirken. Beispielsweise können sich die Verbindungspunkte zwischen Zugmittel und Kurbelwelle jeweils in der Mitte einer Kröpfung befinden. Bei den Zugmitteln kann es sich bevorzugt um Seile, insbesondere Stahlseile handeln.

Bewegt sich eine Kröpfung der von der Rotorwelle angetriebenen ersten Kurbelwelle nach oben, so wird eine korrespondierende Kröpfung der zweiten Kurbelwelle über das Zugmittel ebenfalls nach oben gezogen. Während einer Abwärtsbewegung der Kröpfung der ersten Kurbelwelle kann von dieser keine Kraft über das Zugmittel auf die korrespondierende Kröpfung der zweiten Kurbelwelle ausgeübt werden. Allerdings kann diese sich mittels Schwerkraft nach unten bewegen bevor sie erneut über das Zugmittel von der Kröpfung der ersten Kurbelwelle nach oben gezogen wird. Auf diese Weise kann eine Bewegung der ersten Kurbelwelle mit einfachen und leichten Bauteilen auf die zweite Kurbelwelle übertragen werden. Dadurch kann die Rotorwelle wesentlich kürzer ausgeführt werden, woraus ein geringeres Gewicht und eine höhere Belastbarkeit der Rotorwelle resultiert. Zudem wird weniger Material bei der Fertigung der Rotorwelle benötigt, wodurch zusätzlich Kosten eingespart werden können.

### Beispiele

Ausführungsbeispiele der erfindungsgemäßen Windkraftanlage werden im Folgenden unter Bezugnahme auf die Figuren näher beschrieben. In den Figuren sind gleiche oder ähnliche Elemente mit gleichen Bezugszeichen versehen. Daher wird auf eine wiederholende Beschreibung verzichtet, sofern diese nicht notwendig ist.
Figur 1 zeigt schematisch und vereinfacht eine räumliche Darstellung einer Windkraftanlage gemäß einem Ausführungsbeispiel der Erfindung.
Figur 2 zeigt in vereinfachter schematischer Darstellung Rotorblätter der in Figur 1 dargestellten Windkraftanlage in unterschiedlichen Positionen.
Figur 3 zeigt in vereinfachter schematischer Darstellung einen Kettentrieb einer Windkraftanlage gemäß einem Ausführungsbeispiel der Erfindung in einer Vorderansicht.

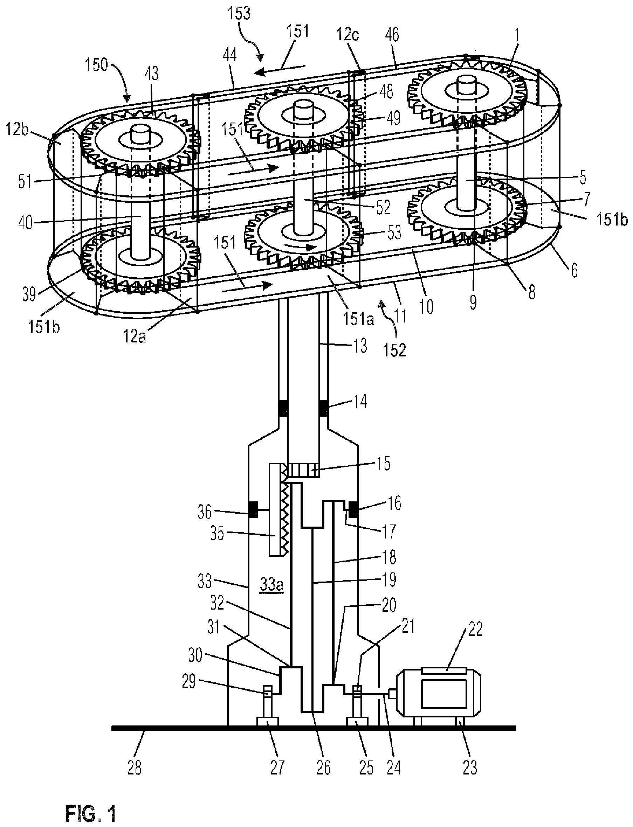

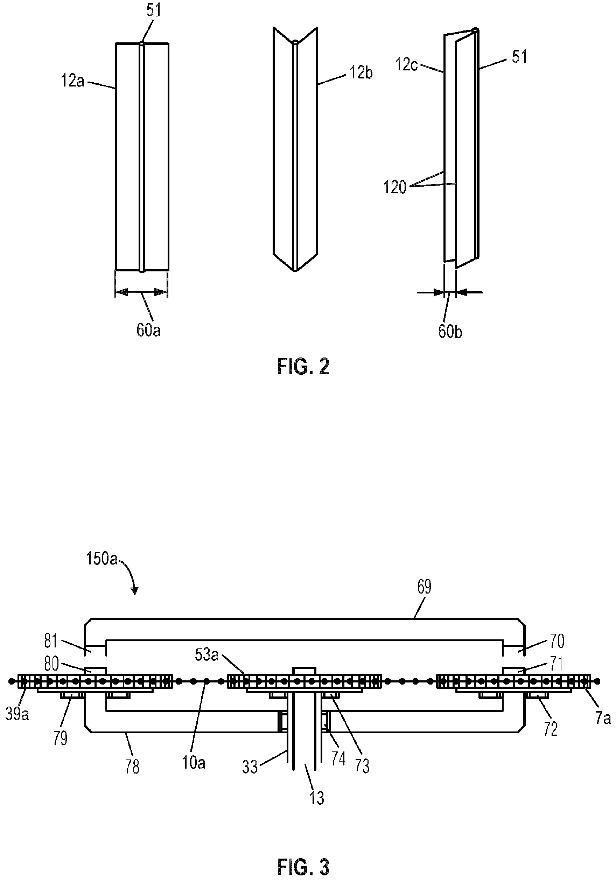

Das in Figur 1 dargestellte Ausführungsbeispiel der erfindungsgemäßen Windkraftanlage umfasst einen Turm 33, einen Rotor 49 mit einer Rotorwelle 13 und mehrere Rotorblätter 12a, 12b, 12c, die mittels eines Kettentriebs 150 mit dem Rotor 49 gekoppelt sind. Die Rotorblätter 12a, 12b, 12c sind als viereckige, flache Elemente ausgeführt, die um ihre Längsachse 51 klappbar sind (siehe auch Figur 2). Dabei sind vollständig aufgeklappte Rotorblätter mir dem Bezugszeichen 12a bezeichnet, teilweise zugeklappte Rotorblätter sind mit dem Bezugszeichen 12b und vollständig zugeklappte Rotorblätter sind mit dem Bezugszeichen 12c bezeichnet. In Figur 1 ist von den dargestellten Rotorblättern 12a, 12b, 12c jeweils nur eines vom gleichen Typ mit einem Bezugszeichen versehen.

Die Rotorwelle 13 erstreckt sich in vertikaler Richtung in einen Innenraum 33a des Turms 33 und ist darin in einem Lager 14 gelagert. In dem Innenraum befinden sich zudem ein Winkelgetriebe 15, 35 und zwei horizontal und parallel zueinander angeordnete Kurbelwellen 17, 30, die mittels Seilen 32, 19, 18 (Zugmittel) miteinander gekoppelt sind.

Eine erste Kurbelwelle 17 ist auf einer bestimmten Höhe in dem Turm 33 angeordnet, und eine zweite Kurbelwelle 20 ist mittels zweier Lagerböcke 27, 25 auf einem Fundament 28 des Turms aufgestellt. Die erste Kurbelwelle 17 ist an ihren beiden Enden in zwei Lagern 36, 16 gelagert, die an zwei gegenüberliegenden nicht näher bezeichneten Innenwänden des Turms 33 angebracht sind. Die zweite Kurbelwelle 30 ist an ihren beiden Enden in zwei Lagern 29, 21 der Lagerböcke 27, 25 gelagert.

An die zweite Kurbelwelle 20 schließt eine Ausgangswelle 24 an, die sich vorliegend durch eine nicht näher bezeichnete Wand des Turms 33 nach außen erstreckt und mit einem Generator 22 verbunden ist. Die Ausgangswelle 24 kann über eine geeignete Wellenverbindung, z.B. über eine Kupplung mit der Kurbelwelle 30 und dem Generator 22 verbunden sein. Der Generator 22 ist mittels zweier Aufstellelemente 23 auf dem Fundament 28 angeordnet. Es ist ebenso möglich, dass der Generator 22 in dem Innenraum 33a des Turms 33 angeordnet ist.

Die Seile 32, 19, 18, welche die zweite Kurbelwelle 30 an die erste Kurbelwelle 17 koppeln, sind an Verbindungspunkten 31, 26, 20 in der Mittel von nicht näher bezeichneten korrespondierenden Kröpfungen der ersten und zweiten Kurbelwelle 17, 30 angebracht, um eine Kraftübertragung zu bewirken.

An einem unteren Ende der Rotorwelle 13 ist ein Ritzel 15 des Winkelgetriebes 15, 35 angebracht, das in ein Tellerrad 35 des Winkelgetriebes 15, 35 eingreift, welches wiederum auf der ersten Kurbelwelle 17 angebracht ist. Das Ritzel 15 ist mit der Rotorwelle 13 und das Tellerrad 35 ist mit der Kurbelwelle 17 fest verbunden. Die beiden Zahnräder 15, 35 können beispielsweise auf die jeweilige Welle 13, 17 gepresst, geschrumpft oder mittels einer geeigneten Welle-Nabe-Verbindung mit dieser verbunden sein. Das Winkelgetriebe 15, 35 ermöglicht es, eine Drehung der Rotorwelle 13 um eine vertikale Rotationsachse (nicht dargestellt) auf einfache und kompakte Weise in eine Drehung der ersten Kurbelwelle 17 umzuwandeln. Mittels einer geeigneten Wahl der Übersetzung kann zudem eine Drehzahl der ersten Kurbelwelle 17 und damit eine Generatordrehzahl eingestellt werden.

Wenn die Rotorwelle 13 über das Ritzel 15 und das Tellerrad 35 die erste Kurbelwelle 17 antreibt und sich dadurch eine von deren Kröpfungen nach oben bewegt, so wird eine korrespondierende Kröpfung der zweiten Kurbelwelle 30 über das entsprechende Seil 32, 19, 18 ebenfalls nach oben gezogen. Während einer Abwärtsbewegung der Kröpfung der ersten Kurbelwelle 17 kann von dieser keine Kraft über das Seil 32, 19, 18 auf die korrespondierende Kröpfung der zweiten Kurbelwelle 30 ausgeübt werden. Allerdings kann diese sich mittels Schwerkraft nach unten bewegen bevor sie erneut über das Seil 32, 19, 18 von der Kröpfung der ersten Kurbelwelle 17 nach oben gezogen wird. Auf diese Weise kann eine Drehung der ersten Kurbelwelle 17 mit einfachen und leichten Bauteilen auf die zweite Kurbelwelle 30 und die Ausgangswelle 24 übertragen werden, wodurch der Generator 22 angetrieben werden kann.

Der Kettentrieb 150 umfasst vorliegend drei Zahnradpaare 43, 39, 40; 48, 53, 52; 1, 7, 5, die jeweils zwei, in vertikale Richtung voneinander beabstandete, Zahnräder 43, 39; 48, 53; 1, 7 und eine Welle 40, 52, 5 enthalten. Die beiden Zahnräder 43, 39; 48, 53; 1, 7 sind mit der Welle 40, 52, 5 fest verbunden. Alle Elemente der Zahnradpaare 43, 39, 40; 48, 53, 52; 1, 7, 5 sind identisch ausgeführt, insbesondere umfassen deren Zahnräder 43, 39; 48, 53; 1, 7 einen gleichen Durchmesser und eine gleiche Zähnezahl.

Das mittlere Zahnradpaar 48, 53, 52 stellt den Rotor 49 dar, während die beiden äußeren Zahnradpaare 43, 39, 40; 1, 7, 5 zur Bildung einer ovalen Führungsbahn 151 dienen, auf der die Rotorblätter 12a, 12b, 12c um den Rotor 49 rotieren. Die beiden äußeren Zahnradpaare 43, 39, 40; 1, 7, 5 sind in einem gleichen Abstand zu dem den Rotor 49 ausbildenden mittleren Zahnradpaar 48, 53, 52 angeordnet. Der Abstand ist dabei derart gewählt, dass eine Länge eines geraden Abschnitts 151a der ovalen Führungsbahn 151 einem Umfang des Rotors 49 entspricht.

Des Weiteren enthält der Kettentrieb 150 zwei identisch ausgeführte Ketten 46, 10, von denen eine Kette 46 die oberen Zahnräder 43, 48, 1 und eine zweite Kette 10 die unteren Zahnräder 39, 53, 7 der drei Zahnradpaare 43, 39, 40; 48, 53, 52; 1, 7, 5 umschließt. An einer von den Zahnrädern 43, 39; 48, 53; 1, 7 abgewandten Seite der Ketten 44, 10 sind die Rotorblätter 12a, 12b, 12c an Befestigungspunkten 9 angebracht, von denen nur einer bezeichnet ist. Die Befestigungspunkte 9 können beispielsweise auf den Rotorblättern 12a, 12b, 12c zugewandten Außenlaschen (nicht dargestellt) der beiden Ketten 44, 10 angebracht sein.

Die ovale Führungsbahn 151 weist zwei einander gegenüberliegende kreisbogenförmige Abschnitte 151b auf, zwischen denen zwei gerade Abschnitte 151a angeordnet sind. Die kreisbogenförmigen Abschnitte 150b sind vorliegend halbkreisförmig mit einem Mittelpunktswinkel von 180° ausgebildet. Auf einem äußeren Umfang der ovalen Führungsbahn 151 sind zwei Führungsschienen 44, 11 in vertikaler Richtung beabstandet voneinander angeordnet, in denen die Rotorblätter 12a, 12b, 12c mittels Führungselementen 8 geführt sind, von denen nur eines mit einem Bezugszeichen versehen ist. Bei den Führungsschienen 44, 11 kann es sich beispielsweise um Gleitschienen 44, 11 mit Gleitelementen 8 oder Laufschienen 44, 11 mit Rollen 8 handeln.

Der vertikale Abstand zwischen den beiden Führungsschienen 44, 11 ist gleich einem vertikalen Abstand der beiden Ketten 46, 10, die auf den Zahnradpaaren 43, 39, 40; 48, 53, 52; 1, 7, 5 montiert sind. Folglich befinden sich die Befestigungspunkte 9 an den Ketten 46, 10 jeweils auf gleicher Höhe wie die Gleitelemente 8 in gegenüberliegenden Führungsschienen 44, 11. Zudem entspricht der vertikale Abstand zwischen den Ketten 46, 10 und den Führungsschienen 44, 11 einer Länge der viereckigen Rotorblätter 12a, 12b, 12c, so dass diese jeweils an ihren Ecken mit den Befestigungspunkten 9 der Ketten 46, 10 und den Führungselementen 8 der Führungsschienen 44, 11 verbunden werden können. Dadurch können die Rotorblätter 12a, 12b, 12c auf der ovalen Führungsbahn 151 sicher geführt und zuverlässig auf- und zugeklappt werden.

Die Führungsschienen 44, 11 sind an einer Längsseite 152 der Führungsbahn 151 derart horizontal beabstandet von den Ketten 46, 10 des Kettentriebs 150 angeordnet, dass eine Breite 60a der Führungsbahn 151 im Wesentlichen einer Breite der Rotorblätter 12a im aufgeklappten Zustand entspricht (vgl. Figur 2).

Auf einer gegenüberliegenden Längsseite 153 der Führungsbahn 151 sind die Führungsschienen 44, 11 hingegen derart horizontal beabstandet von den Ketten 46, 10 des Kettentriebs 150 angeordnet, dass eine Breite der Führungsbahn 151 im Wesentlichen einer Breite 60b der Rotorblätter 12c im zugeklappten Zustand entspricht. Die Breite 60b entspricht dabei im Wesentlichen einer doppelten Dicke der Rotorblätter 12c, da im zugeklappten Zustand nur die Längsseiten 120 der Rotorblätter 12c einer Windströmung entgegenstehen (vgl. Figur 2).

An den beiden kreisbogenförmige Abschnitte 151b verengt sich ein Abstand der Führungsschienen 44, 11 zu den Ketten 46, 10 kontinuierlich, um einen Übergang von der Breite der Führungsbahn 151 auf der einen Längsseite 152 zu der Breite der Führungsbahn 151 auf der gegenüberliegenden Längsseite 153 zu schaffen. Folglich befinden sich die Rotorblätter 12b in den kreisbogenförmigen Abschnitten 151b in einem teilweise zugeklappten Zustand.

Wenn die Rotorblätter 12a auf der einen Längsseite 152 der Führungsbahn 151 vollständig aufgeklappt sind, stellen sich diese der Windströmung mit ihrer maximalen Windangriffsfläche entgegen. Eine Breite 60a der maximalen Windangriffsfläche entspricht dabei einer Breite 60a der Rotorblätter 12a (vgl. Figur 2). Sind die Rotorblätter 12c auf der gegenüberliegenden Längsseite zusammengeklappt, so stellen sich diese mit einer minimalen Windangriffsfläche in die Windströmung. Eine Breite 60b der minimalen Windangriffsfläche entspricht dabei im Wesentlichen einer doppelten Dicke der Rotorblätter 12c (vgl. Figur 2).

Folglich wird durch die Windströmung im Wesentlichen eine Kraft auf die Rotorblätter 12a auf der einen Längsseite 152 ausgeübt, die dazu führt, dass der Rotor 49 über den Kettentrieb 150 in eine Drehung versetzt wird. Insbesondere können die Rotorblätter 12a auf der einen Längsseite 152 derart mit ihrer maximalen Windangriffsfläche in der Windströmung stehen, dass die resultierende Kraft senkrecht auf diese wirkt (maximale Kraft). Dazu kann der Rotor 49 mit dem Rotorblättern 12a, 12b, 12c entsprechend in die Windströmung gestellt werden.

Durch die Länge des geraden Abschnitts 151a der Führungsbahn 151, die einem Umfang des Rotors 49 entspricht, wirkt während einer kompletten Drehung des Rotors 49 eine maximale Kraft auf die Rotorblätter 12a, die den geraden Abschnitt 151a passieren. Somit kann durch die Ausgestaltung der ovalen Führungsbahn 151, eine Leistungssteigerung im Vergleich zu einer kreisförmigen Rotation der Rotorblätter 12a um den Rotor 49 erzielt werden.

Wenn die Rotorblätter 12a in den kreisbogenförmigen Abschnitt 151b eintreten, der die eine Längsseite 152 mit der gegenüberliegenden Längsseite 153 verbindet, werden sie durch dessen kontinuierliche Verengung nach und nach zusammengeklappt, bis sie auf der gegenüberliegenden Längsseite 153 ihre minimale Windangriffsfläche aufweisen.

Wenn die Rotorblätter 12c hingegen in den kreisbogenförmigen Abschnitt 151b eintreten, der die gegenüberliegende Längsseite 153 mit der einen Längsseite 152 verbindet, werden sie durch dessen kontinuierliche Aufweitung nach und nach wieder aufgeklappt bis sie bei Erreichen des geraden Abschnitts 151a wieder ihre maximale Windangriffsfläche aufweisen.

In Figur 3 ist in vereinfachter schematischer Darstellung ein Ausführungsbeispiels eines Kettentriebs 150a gezeigt, der in der Windkraftanlage aus Figur 1 eingesetzt werden kann. Dabei ist ein Ausschnitt aus dem Kettentrieb 150a in einer Vorderansicht dargestellt.

Der Kettentrieb 150a ist in einem Rahmen 69, 78 gelagert und weist drei Zahnradpaare auf, von denen vorliegend nur die unteren Zahnräder 39a, 53a, 7a gezeigt sind, die von der Kette 10a umschlungen sind. Der Rahmen 69, 78 umfasst vorliegend eine obere U-förmige Strebe 69 und eine untere U-förmige Strebe 78, die einander zugewandt sind. Die obere Strebe 69 erstreckt sich oberhalb der Zahnradpaare in Längsrichtung des Kettentriebs 150a und die untere Strebe 78 erstreckt sich unterhalb der Zahnradpaare in Längsrichtung des Kettentriebs 150a.

Die beiden äußeren Zahnräder 39a, 7a sind vorliegend jeweils in Lagern 79, 72 gelagert, die an der unteren Strebe 78 des Rahmens 69, 78 angebracht sind. Die untere Strebe 78 weist zudem an jedem ihrer Enden einen Adapter 80, 71 auf, mit denen die Zahnräder 39a, 7a bzw. die Zahnradpaare auf der unteren Strebe 78 angebracht bzw. fixiert werden können. Ebenso weist die obere Strebe 69 an jedem ihrer Enden einen Adapter 81, 70 auf, mit denen obere Zahnräder bzw. die Zahnradpaare auf der oberen Strebe 69 angebracht bzw. fixiert werden können.

In der Mitte der unteren Strebe 78 ist ein weiteres Lager 74 angeordnet, welches einen oberen Abschnitt des Turms 33 aufnimmt, in dem sich die Rotorwelle 13 erstreckt. Auf dem oberen Abschnitt des Turms 33 ist das Zahnrad 53a des Rotors in einem weiteren Lager 73 gelagert. Dadurch kann der Rahmen 69, 78 auf dem oberen Abschnitt des Turms 33 gedreht werden, um z.B. die Rotorblätter bei Bedarf ausrichten zu können.

### Bezugszeichenliste:

- 150: Kettentrieb
- 151: ovale Führungsbahn
- 151a: gerade Abschnitte der Führungsbahn
- 151b: kreisbogenförmige Abschnitte der Führungsbahn
- 12a, 12b, 12c: Rotorblätter
- 9: Befestigungspunkt Rotorblatt an Kette
- 10, 46: Kette, Zugmittel
- 8: Führungselement Rotorblatt in Führungsschiene
- 1, 7, 5; 48, 53, 52; 43, 39, 40: Zahnradpaare
- 11, 44: Führungsschienen
- 5, 52,40: Wellen
- 51: Längsachse Rotorblätter
- 13: Rotorwelle
- 14: Lager Rotorwelle
- 16. 36: Lager erste Kurbelwelle
- 17: erste Kurbelwelle
- 18, 19, 32: Seile, Zugmittel
- 20, 26, 31: Verbindungspunkte Seile an Kurbelwelle
- 21, 29: Lager zweite Kurbelwelle
- 22: Generator
- 23: Aufstellelemente Generator
- 24: Ausgangswelle
- 25, 27: Lagerböcke zweite Kurbelwelle
- 28: Fundament, Boden
- 30: zweite Kurbelwelle
- 49: Rotor
- 35: Tellerrad Winkelgetriebe
- 15: Ritzel Winkelgetriebe
- 33: Turm
- 33a: Innenraum Turm
- 60a, 60b: Breite Windangriffsfläche am Rotorblatt
- 69, 78: Rahmen Zahnradpaare
- 70, 71; 80, 81: Adapter
- 72, 73, 74, 79: Lager im/am Rahmen

## Patentansprüche

1. Windkraftanlage, umfassend
- einen Rotor (49) mit einer Rotorwelle (13), die sich in vertikaler Richtung erstreckt;
- einen Turm (33), in dem die Rotorwelle (13) gelagert ist;
- eine Ausgangswelle (24), die in dem Turm (33) angeordnet und dazu eingerichtet ist, von der Rotorwelle (13) angetrieben zu werden,
- mehrere Rotorblätter (12a, 12b, 12c), die mittels eines Zugmitteltriebs (150) mit dem Rotor (49) gekoppelt sind und sich in vertikaler Richtung erstrecken,
wobei die Rotorblätter (12a, 12b, 12c) in einer horizontalen Ebene auf einer ovalen Führungsbahn (151) angeordnet und dazu eingerichtet sind, auf der ovalen Führungsbahn (151) um den Rotor (49) zu rotieren, und
wobei die ovale Führungsbahn (151) auf einer Seite (152) eine Breite aufweist, die einer Breite (60a) einer maximalen Windangriffsfläche der Rotorblätter (12a, 12b, 12c) entspricht, und auf einer gegenüberliegenden Seite (153) eine Breite aufweist, die einer Breite (60b) einer minimalen Windangriffsfläche der Rotorblätter (12a, 12b, 12c) entspricht, **dadurch gekennzeichnet, dass**
eine Länge eines geraden Abschnitts (151a) der ovalen Führungsbahn (151) einem Umfang des Rotors (49) entspricht.

2. Windkraftanlage nach Anspruch 1, wobei die ovale Führungsbahn (151) zwei kreisbogenförmige Abschnitte (151b) umfasst, deren Breite sich kontinuierlich von der Breite der einen Seite (152) auf die Breite der gegenüberliegenden Seite (153) reduziert.

3. Windkraftanlage nach Anspruch 1 oder 2, wobei die ovale Führungsbahn (151) dazu eingerichtet ist, die Breite (60a, 60b) der Rotorblätter (12a, 12b, 12c) von einem Wert bei maximaler Windangriffsfläche auf einen Wert bei minimaler Windangriffsfläche zu reduzieren und vice versa.

4. Windkraftanlage nach einem der vorstehenden Ansprüche, wobei die Rotorblätter (12a, 12b, 12c) entlang ihrer Längsachse (51) zusammfaltbar oder zusammenklappbar sind, um die minimale Windangriffsfläche einzustellen.

5. Windkraftanlage nach einem der vorstehenden Ansprüche, wobei der Zugmitteltrieb (150) an einen inneren Umfang der ovalen Führungsbahn (151) angrenzt, und auf einem äußeren Umfang der ovalen Führungsbahn (151) mindestens eine Führungsschiene (11, 44) angeordnet ist.

6. Windkraftanlage nach Anspruch 5, wobei die Rotorblätter (12a, 12b, 12c) auf einer dem inneren Umfang der ovalen Führungsbahn (151) zugewandten Seite mit mindestens einem Zugmittel (10, 46) des Zugmitteltriebs (150) verbunden sind, und auf einer dem äußeren Umfang der ovalen Führungsbahn (151) zugewandten Seite in der mindestens einen Führungsschiene (11, 44) geführt sind.

7. Windkraftanlage nach einem der vorstehenden Ansprüche, wobei der Zugmitteltrieb (150) als Kettentrieb (150) oder Riementrieb mit drei Zahnradpaaren (1, 7, 5; 48, 53, 52; 43, 39, 40) oder Riemenscheibenpaaren ausgeführt ist, die nebeneinander auf einer Innenseite der ovalen Führungsbahn (151) angeordnet sind, wobei ein mittleres der drei Zahnradpaare (1, 7, 5; 48, 53, 52; 43, 39, 40) oder Riemenscheibenpaare den Rotor (49) umfasst.

8. Windkraftanlage nach Anspruch 7, wobei jedes Zahnradpaar (1, 7, 5; 48, 53, 52; 43, 39, 40) oder Riemenscheibenpaar zwei in vertikaler Richtung voneinander beabstandete Zahnräder (1, 7; 48, 53; 43, 39) oder Riemenscheiben enthält, die auf einer Welle (5, 52,40) angebracht sind.

9. Windkraftanlage nach einem der Ansprüche 7 oder 8, wobei der Kettentrieb (150) oder der Riementrieb mit den drei Zahnradpaaren (1, 7, 5; 48, 53, 52; 43, 39, 40) oder Riemenscheibenpaaren in einem Rahmen (69, 78) gelagert ist.

10. Windkraftanlage nach einem der vorstehenden Ansprüche, wobei die Ausgangwelle (24) in dem Turm (33) dazu eingerichtet ist, über ein Winkelgetriebe (15, 35) und/oder eine oder mehrere Kurbelwellen (17, 30) von der Rotorwelle (13) angetrieben zu werden.

11. Windkraftanlage nach Anspruch 10, wobei die Rotorwelle (13) über das Winkelgetriebe (15, 35) mit einer ersten Kurbelwelle (17) und die erste Kurbelwelle (17) über mehrere Zugmittel (18, 19, 32) mit einer zweiten Kurbelwelle (30) verbunden ist.

12. Windkraftanlage nach Anspruch 11, wobei die Zugmittel (18, 19, 32) an korrespondierenden Kröpfungen der ersten und zweiten Kurbelwelle (17, 30) angebracht sind.

13. Windkraftanlage nach Anspruch 11 oder 12, wobei die zweite Kurbelwelle (30) auf einem Fundament (28) des Turms (33) und die erste Kurbelwelle (17) auf einer bestimmten Höhe in dem Turm (33) angeordnet ist.

14. Verwendung der Windkraftanlage gemäß eines der Ansprüche 1-13 Antrieb eines Generators (22) oder einer Maschine.

## Claims

1. A wind power plant comprising
- a rotor (49) having a rotor shaft (13) extending in the vertical direction;
- a tower (33) in which the rotor shaft (13) is supported;
- an output shaft (24) disposed in the tower (33) and configured to be driven by the rotor shaft (13),
- a plurality of rotor blades (12a, 12b, 12c) coupled to the rotor (49) by means of a traction drive (150) and extending in the vertical direction,
the rotor blades (12a, 12b, 12c) being disposed on an oval guideway (151) in a horizontal plane and configured to rotate about the rotor (49) on the oval guideway (151), and
the oval guideway (151) having a width on one side (152) corresponding to a width (60a) of a maximum wind contact surface area of the rotor blades (12a, 12b, 12c) and having a width on an opposite side (153) corresponding to a width (60b) of a minimum wind contact surface area of the rotor blades (12a, 12b, 12c), **characterized in that** a length of a straight segment (151a) of the oval guideway (151) corresponds to a circumference of the rotor (49).

2. The wind power plant according to claim 1, wherein the oval guideway (151) comprises two circular arc-shaped segments (151b), the width thereof continuously reducing from the width of the one side (152) to the width of the opposite side (153).

3. The wind power plant according to claim 1 or 2, wherein the oval guideway (151) is configured to reduce the width (60a, 60b) of the rotor blades (12a, 12b, 12c) from a value at the maximum wind contact surface area to a value at the minimum wind contact surface area and vice versa.

4. The wind power plant according to any one of the preceding claims, wherein the rotor blades (12a, 12b, 12c) can be folded together or collapsed along the longitudinal axis (51) thereof in order to set the minimum wind contact surface area.

5. The wind power plant according to any one of the preceding claims, wherein the traction drive (150) is adjacent to an inner perimeter of the oval guideway (151) and at least one guide rail (11, 44) is disposed on an outer perimeter of the oval guideway (151).

6. The wind power plant according to claim 5, wherein the rotor blades (12a, 12b, 12c) are connected to at least one traction mechanism (10, 46) of the traction drive (150) on a side facing toward the inner perimeter of the oval guideway (151) and are guided in the at least one guide rail (11, 44) on a side facing toward the outer perimeter of the oval guideway (151).

7. The wind power plant according to any one of the preceding claims, wherein the traction drive (150) is implemented as a chain drive (150) or belt drive having three pairs of gears (1, 7, 5; 48, 53, 52; 43, 39, 40) or pairs of belt pulleys disposed adjacent to each other on an inner side of the oval guideway (151), wherein a middle pair of the three pairs of gears (1, 7, 5; 48, 53, 52; 43, 39, 40) or pairs of belt pulleys comprises the rotor (49).

8. The wind power plant according to claim 7, wherein each pair of gears (1, 7, 5; 48, 53, 52; 43, 39, 40) or pair of belt pulleys comprises two gears (1, 7; 48, 53; 43, 39) or belt pulleys spaced apart vertically from each other and mounted on a shaft (5, 52, 40).

9. The wind power plant according to any one of the claims 7 or 8, wherein the chain drive (150) or the belt drive having the three pairs of gears (1, 7, 5; 48, 53, 52; 43, 39, 40) or pairs of belt pulleys is supported in a frame (69, 78).

10. The wind power plant according to any one of the preceding claims, wherein the output shaft (24) in the tower (33) is configured to be driven by the rotor shaft (13) by means of an angular drive (15, 35) and/or one or more crankshafts (17, 30).

11. The wind power plant according to claim 10, wherein the rotor shaft (13) is connected to a first crankshaft (17) by means of the angular drive (15, 35) and the first crankshaft (17) is connected to a second crankshaft (30) by means of a plurality of traction mechanisms (18, 19, 32).

12. The wind power plant according to claim 11, wherein the traction mechanisms (18, 19, 32) are mounted on corresponding cranks of the first and second crankshaft (17, 30).

13. The wind power plant according to claim 11 or 12, wherein the second crankshaft (30) is disposed on a foundation (28) of the tower (33) and the first crankshaft (17) is disposed in the tower (33) at a particular height.

14. A use of the wind power plant according to any one of the claims 1-13 for driving a generator (22) or a machine.

## Revendications

1. Installation éolienne, comprenant
- un rotor (49) comportant un arbre de rotor (13) qui s'étend dans la direction verticale ;
- une tour (33) dans laquelle est monté l'arbre de rotor (13) ;
- un arbre de sortie (24) qui est disposé dans la tour (33) et conçu pour être entraîné par l'arbre de rotor (13),
- plusieurs pales de rotor (12a, 12b, 12c) qui sont couplées au rotor (49) au moyen d'un entraînement à moyens de traction (150) et s'étendent dans la direction verticale,
les pales de rotor (12a, 12b, 12c) étant disposées dans un plan horizontal sur une piste de guidage ovale (151) et étant conçues pour tourner autour du rotor (49) sur la piste de guidage ovale (151), et
la piste de guidage ovale (151) présentant, sur un côté (152), une largeur qui correspond à une largeur (60a) d'une surface de fardage maximale des pales de rotor (12a, 12b, 12c), et, sur un côté opposé (153), une largeur qui correspond à une largeur (60b) d'une surface de fardage minimale des pales de rotor (12a, 12b, 12c), **caractérisée en ce qu'**une longueur d'un tronçon rectiligne (151a) de la piste de guidage ovale (151) correspond à une circonférence du rotor (49).

2. Installation éolienne selon la revendication 1, la piste de guidage ovale (151) comprenant deux tronçons en forme d'arc de cercle (151b) dont la largeur diminue continuellement de la largeur d'un côté (152) à la largeur du côté opposé (153).

3. Installation éolienne selon la revendication 1 ou 2, la piste de guidage ovale (151) étant conçue pour réduire la largeur (60a, 60b) des pales de rotor (12a, 12b, 12c) d'une valeur à la surface de fardage maximale à une valeur à la surface de fardage minimale, et inversement.

4. Installation éolienne selon l'une des revendications précédentes, les pales de rotor (12a, 12b, 12c) pouvant être repliées ou rabattues le long de leur axe longitudinal (51) afin de régler la surface de fardage minimale.

5. Installation éolienne selon l'une des revendications précédentes, l'entraînement à moyens de traction (150) étant adjacent à une circonférence intérieure de la piste de guidage ovale (151), et au moins un rail de guidage (11, 44) étant disposé sur une circonférence extérieure de la piste de guidage ovale (151).

6. Installation éolienne selon la revendication 5, les pales de rotor (12a, 12b, 12c) étant reliées, sur un côté orienté vers la circonférence intérieure de la piste de guidage ovale (151), à au moins un moyen de traction (10, 46) de l'entraînement à moyens de traction (150), et étant guidées, sur un côté orienté vers la circonférence extérieure de la piste de guidage ovale (151), dans l'au moins un rail de guidage (11, 44).

7. Installation éolienne selon l'une des revendications précédentes, l'entraînement à moyens de traction (150) étant réalisé sous la forme d'un entraînement par chaîne (150) ou d'un entraînement par courroie comportant trois paires de pignons (1, 7, 5 ; 48, 53, 52 ; 43, 39, 40) ou de poulies à courroie, qui sont disposées côte à côte sur un côté intérieur de la piste de guidage ovale (151), une paire centrale parmi les trois paires de pignons (1, 7, 5 ; 48, 53, 52 ; 43, 39, 40) ou de poulies à courroie comprenant le rotor (49).

8. Installation éolienne selon la revendication 7, chaque paire de pignons (1, 7, 5 ; 48, 53, 52 ; 43, 39, 40) ou de poulies à courroie comprenant deux pignons (1, 7 ; 48, 53 ; 43, 39) ou poulies à courroie, espacé(e)s l'un(e) de l'autre dans la direction verticale, qui sont monté(e)s sur un arbre (5, 52, 40).

9. Installation éolienne selon l'une des revendications 7 ou 8, l'entraînement par chaîne (150) ou l'entraînement par courroie étant monté dans un cadre (69, 78) avec les trois paires de pignons (1, 7, 5 ; 48, 53, 52 ; 43, 39, 40) ou de poulies à courroie.

10. Installation éolienne selon l'une des revendications précédentes, l'arbre de sortie (24) dans la tour (33) étant conçu pour être entraîné par l'arbre de rotor (13) par l'intermédiaire d'un engrenage d'angle (15, 35) et/ou d'un ou de plusieurs vilebrequins (17, 30).

11. Installation éolienne selon la revendication 10, l'arbre de rotor (13) étant relié à un premier vilebrequin (17) par l'intermédiaire de l'engrenage d'angle (15, 35) et le premier vilebrequin (17) étant relié à un deuxième vilebrequin (30) par l'intermédiaire de plusieurs moyens de traction (18, 19, 32).

12. Installation éolienne selon la revendication 11, les moyens de traction (18, 19, 32) étant fixés sur des manetons correspondants des premier et deuxième vilebrequins (17, 30).

13. Installation éolienne selon la revendication 11 ou 12, le deuxième vilebrequin (30) étant disposé sur une fondation (28) de la tour (33) et le premier vilebrequin (17) étant disposé à une certaine hauteur dans la tour (33).

14. Utilisation de l'installation éolienne selon l'une des revendications 1 à 13 pour l'entraînement d'un générateur (22) ou d'une machine.
